# EUROPÄISCHE PATENTSCHRIFT

(11) **EP 1 151 368 B1**
(45) Veröffentlichungstag und Bekanntmachung des Hinweises auf die Patenterteilung: **23.07.2003**
(21) Anmeldenummer: 00903507.2
(22) Anmeldetag: 11.01.2000
(51) Int. Cl.: G06F 1/00

(54) **VERFAHREN ZUM GESICHERTEN ZUGRIFF AUF ZUMINDEST EINE VARIABLE IN EINEM PRÄEMPTIV MULTITASKING-GESTEUERTEN PROZESSORSYSTEM**
METHOD FOR PROTECTED ACCESS TO AT LEAST ONE VARIABLE IN A PREEMPTIVE MULTITASKING-CONTROLLED PROCESSOR SYSTEM
PROCEDE D'ACCES SECURISE A AU MOINS UNE VARIABLE DANS UN SYSTEME DE PROCESSEUR COMMANDE EN MODE MULTITACHE PREAMPTIF

(30) Priorität: 29.01.1999 DE 19903599
(43) Veröffentlichungstag der Anmeldung: 07.11.2001
(73) Patentinhaber: SIEMENS AKTIENGESELLSCHAFT, 80333 München (DE)
(72) Erfinder: SPITZ, Gerhard, D-81669 München (DE)
(86) Internationale Anmeldenummer: DE0000077
(87) Internationale Veröffentlichungsnummer: WO00045236

(56) Entgegenhaltungen:
- WO-A-98/33119
- "SELF-DESTRUCTION LOCKS" IBM TECHNICAL DISCLOSURE BULLETIN, US, IBM CORP., NEW YORK, Bd. 36, Nr. 9B, 1. September 1993 (1993-09-01), Seiten 413-414, XP000397207 ISSN: 0018-8689

## Beschreibung

In bestehenden und zukünftigen Informationsverarbeitungsanlagen, z.B. Personal Computern, werden mit Hilfe des Betriebssystems, Softwareobjekte - üblicherweise auch als Prozesse bezeichnet - so verwaltet, daß das Hardwaresystem, insbesondere die in der Informationsverarbeitungsanlage vorgesehene prozeßverarbeitende Einrichtung, z.B. der Prozessor, mit dem Ziel hoher Gesamteffizienz gleichmäßig ausgelastet wird. So werden die durch das Betriebssystem dem Prozessor zugeteilten Softwaremodule - üblicherweise auch als Tasks bezeichnet - durch den Prozessor bearbeitet. Hierbei sind für die einen Monoprozessor aufweisenden Informationsverarbeitungsanlagen, d.h. die Informationsverarbeitungsanlage besitzt nur einen Prozessor, spezielle Betriebsysteme, z.B. Windows 95, vorgesehen, die auch auf einem Monoprozessor einen Mehrbenutzerund/oder einen Mehrprozeßbetrieb ermöglichen - siehe hierzu insbesondere "Architektur von Betriebssystemen", H. Wetterstein, Hanser Studien Bücher, 1984, S. 54 u. ff.. Der für den Mehrprozeßbetrieb eines Prozessors erforderliche Betriebsmodus ist in der Fachwelt unter dem Begriff "Mehrprogrammbetrieb" ("multiprogramming") oder auch "Multitasking" bekannt. Somit kann durch die Informationsverarbeitungsanlage, während der Ausführung einer Task auch eine weitere Task wie z.B. das Lesen von Daten von einem Speichermedium der Informationsverarbeitungsanlage oder z.B. das Anzeigen von Daten auf einer Datensichtstation "quasiparallel" ausgeführt werden.

Weiterhin wird zwischen "kooperativen" und "präemptiven" Multitasking unterschieden. Beim "kooperativen" Multitasking bestimmt jede einzelne aktuell ausgeführte Task die Zeitdauer der Beanspruchung des Prozessors nach Bedarf selbst, d.h. die aktuell ablaufende Task entscheidet über den Zeitpunkt der Freigabe des Prozessors für die Verarbeitung weiterer Tasken. Beim "präemptiven" Multitasking wird durch eine Task des Betriebssystems, in der Fachwelt als "Scheduler" oder auch "Taskscheduler" bekannt, die aktuell ausgeführte Task nach Beendigung einer vordefinierten bzw. zugeteilten Zeitdauer unterbrochen, d.h. der Zeitpunkt der Zuteilung und der Freigabe des Prozessors wird mit Hilfe des Taskschedulers durchgeführt.

Für die Ausführung einer Aufgabe des Betriebssystems, d.h. beispielsweise einer Betriebssystemtask wie dem Taskscheduler, ist ein spezieller Betriebsmodus des Prozessors zum Schutz der Daten der Betriebssystemtask vorgesehen, der Supervisor- bzw. Kernel-Modus genannt wird - siehe hierzu insbesondere Andrew S. Tanenbaum "Betriebssysteme - Entwurf und Realisierung" Teil 1, Prentice-Hall International, 1990, S.31/32. Dazu wird der Prozessor mit Hilfe eines Supervisor-Aufrufes von einem User-Modus in den Supervisor-Modus umgeschaltet und somit wird die Kontrolle des Prozessors dem Betriebssystem bzw. dessen Tasks übertragen. Im Unterschied zum Supervisor-Modus sind im User-Modus nicht alle Instruktionen zulässig, unter anderem ist Tasks im User-Modus die Verwendung von Ein- und Ausgabeinstruktionen sowie von einigen speziellen Instruktionen untersagt. Ebenso ist im User-Modus in der Regel nicht der Zugriff auf alle Daten möglich, d.h. beispielsweise sind die Daten des Betriebssystems für Nicht-Betriebssystemtasks weder lesbar noch veränderbar.

Speziell bei nach dem Multitasking-Prinzip wirkenden Informationsverarbeitungsanlagen müssen Variablen oder Blöcke von Variablen, auf die bei der Abarbeitung einer Task zugegriffen wird, gegen konkurrierende Zugriffe, beispielsweise durch weitere Tasks, geschützt werden. Hierdurch wird sichergestellt, daß beispielsweise die beim zweifachen gleichzeitigen Variablenzugriff auftretenden Fehler in der zugreifenden Task zu keinen Blockaden von weiteren Tasks oder der gesamten Informationsverarbeitungsanlage führen können. Ein derartiger Schutzmechanismus wird im folgenden mit Hilfe der Formulierung "gesicherter Zugriff" auf zumindest eine Variable beschrieben, wobei der Begriff Variable sowohl eine in einer Speichereinheit gespeicherte Variable eines Softwaremoduls als auch eine in einem Hardwareregister gespeicherte, hardwarebezogene Einstellinformation bezeichnen kann. Derartige gesicherte Zugriffe erfolgen bei bestimmten Problemstellungen, z.B. in Informationsanlagen, die zur Steuerung von Echtzeitsystemen dienen, jedoch auf administrierbare Daten zurückgreifen müssen, häufig und sind von kurzer zeitlicher Dauer im Vergleich zur mittleren zeitlichen Dauer zwischen zwei aufeinanderfolgenden Taskwechseln. Folglich ist die Wahrscheinlichkeit für einen Taskwechsel während eines gesicherten Zugriffs sehr gering, kann aber keinesfalls ausgeschlossen werden.

Die Realisierung eines "gesicherten Zugriffs" durch eine Task kann mit Hilfe von verschiedenen Schutzmechanismen erfolgen. Hierzu zählt unter anderem das Setzen einer Taskwechselsperre zur Vermeidung eines konkurrierenden Zugriffs durch eine weitere Task auf die Variablen, auf die durch die auf dem Prozessor aktuell laufende Task zugegriffen wird. Dazu wird vor dem Zugriff auf die zu lesenden Variablen mit Hilfe eines Supervisor-Aufrufes der Prozessor in den Supervisor-Modus umgeschaltet und ein Setzen einer Taskwechselsperre beim Betriebssystem angefordert, um für die aktuell zugreifende Task einen Exklusivzugriff für den Prozessor und somit auch für die gewünschte Variable zu erreichen. Anschließend wird der Prozessor in den User-Modus zurückgeschaltet und durch die zuvor unterbrochene Task kann nun der gewünschte Zugriff auf die Variable gesichert, d.h. ohne Unterbrechung vorgenommen werden. Nach Beendigung des gesicherten Zugriffs durch die aktuell ablaufende Task muß erneut durch einen Supervisor-Aufruf in den Supervisor-Modus gewechselt und in diesem die Taskwechselsperre durch das Betriebssystem zurückgesetzt werden. Zur Weiterbearbeitung der aktuell abzuarbeitenden Task wird anschließend der Prozessor in den User-Modus zurückgesteuert und die beim Setzen der Taskwechselsperre aktivierte Zeitüberwachung zur Vermeidung einer beliebig langen Blockierung des Prozessors deaktiviert.

Eine weitere Methode zur Realisierung eines gesicherten Zugriffs wird bei der Synchronisation von Tasks, d.h. der Abstimmung von mehreren auf den Prozessor abwechselnd zugreifenden Tasks, zur Vermeidung der beim Multitaskingbetrieb auftretenden Konflikte eingesetzt. Hierbei wird für die Synchronisation der einzelnen Tasks häufig die Semaphortechnik verwendet. Gemäß seiner mathematisch-theoretischen Definition ist ein Semaphor eine ganzzahlige, nicht negative Variable verbunden mit einer Warteschlange. Hierbei legt der Anfangswert des Semaphors fest, wieviele Tasks sich gleichzeitig in einem durch ein Semaphor kontrollierten gesicherten Abschnitt befinden dürfen. Die Warteschlange enthält die Tasks, die auf ein Betreten des gesicherten Abschnitts warten. Hierzu wird von der aktuell ablaufenden Task zur Realisierung des gesicherten Zugriffs auf eine Variable mittels eines ununterbrechbaren Lese-Schreibzyklus ein Semaphor überprüft und modifiziert. Ist beispielsweise das Semaphor größer als 0, so wird es dekrementiert und anschließend durch die aktuell ablaufende Task der gesicherte Zugriff auf die gewünschte Variable durchgeführt. Ist das Semaphor bereits gleich 0, so wird die einen gesicherten Zugriff anfordernde Task in den Wartezustand gesteuert und die Semaphorvariable nicht geändert. Am Ende des gesicherten Zugriffs auf die Variable wird überprüft, ob Tasks an diesem Semaphor warten und gegebenenfalls eine der im Wartezustand befindlichen Tasks aktiviert, d.h. der Prozessor zugeteilt. Falls keine Task am Semaphor wartet, wird das Semaphor wieder mittels eines ununterbrechbaren Lese-Schreibzyklus inkrementiert. Diese ununterbrechbaren Lese-Schreibzugriffe auf die Semaphorvariable können entweder ähnlich wie bei der Methode der Taskwechselsperre durch einen Supervisor-Aufruf und der anschließenden Behandlung durch das Betriebssystem oder im User-Modus mit spezieller Unterstützung durch die Prozessor- und Prozessorbus-Hardware realisiert sein. Auch hier ist für die Dauer des gesicherten Zugriffs eine Zeitüberwachung vorgesehen, deren Aufgabe darin besteht eine überdurchschnittlich lange Blockierung des Prozessors zu vermeiden.

Bei den zuvor beschriebenen Realisierungen eines gesicherten Zugriffs auf Variablen sind bei jedem Zugriff mehrere Betriebsmodiwechsel einschließlich der zugehörigen betriebstechnischen Taskbearbeitung oder eine spezielle Unterstützung durch eine Prozessor- und Prozessorbus-Hardware erforderlich, d.h. gesicherte Zugriffe auf Variablen erhöhen die Belastung des Prozessors oder erfordern zusätzliche und speziell unterstützende Hardware.

Die der Erfindung zugrundeliegende Aufgabe besteht darin, die Realisierung eines gesicherten Zugriffs auf zumindest eine Variable in einem präemptiv Multitasking-gesteuerten Prozessorsystem zu verbessern. Die Aufgabe wird durch die Merkmale des Patentanspruches 1 gelöst.

Der wesentliche Aspekt des erfindungsgemäßen Verfahrens ist darin zu sehen, daß zum gesicherten Zugriff auf zumindest eine Variable in einem präemptiv Multitasking-gesteuerten Prozessorsystem ein Zugriffsstatusspeicher vorgesehen ist, in den vor einem aktuellen Zugriff auf zumindest eine Variable von der zugreifenden Task eine Sperrinformation eingetragen wird. Weiterhin wird bei einem von dem Taskscheduler während des aktuellen Zugriffs beabsichtigter Taskwechsel durch den Taskscheduler der Zugriffsstatusspeicher auf eine eingetragene Sperrinformation überprüft und bei eingetragener Sperrinformation wird durch den Taskscheduler der beabsichtigte Taskwechsel verzögert. Schließlich wird mit seiner Hilfe in den Zugriffsstatusspeicher eine Taskwechselinformation eingetragen. Am Ende des aktuellen Zugriffs wird durch die aktuell zugreifende Task (T1) eine Freigabeinformation in den Zugriffsstatusspeicher eingetragen und bei eingetragener Taskwechselinformation der angeforderte Taskwechsel durch die aktuell zugreifende Task eingeleitet. Die Verwendung eines zusätzlichen Zugriffsstatusspeichers bringt den Vorteil mit sich, daß das beispielsweise bei der Methode der Taskwechselsperre erforderliche Umschalten des Prozessors in den Supervisor-Modus und das anschließende Ausführen einer Betriebssystemtask entfällt und somit eine erhebliche dynamische Entlastung des Prozessors erreicht wird, zumal gesicherte Zugriffe auf Variablen bei bestimmten, beim Betrieb einer Informationsverarbeitungsanlage auftretenden Problemstellungen sehr häufig stattfinden. Zusätzlich erfordert das Eintragen der Sperrinformation, der Taskwechselinformation oder der Freigabeinformation nur wenige Maschinenbefehle und ist somit einfach programmtechnisch realisierbar. Desweiteren ist beim erfindungsgemäßen Verfahren im Gegensatz zur Semaphortechnik keine zusätzliche Hardwareunterstützung in Form von Prozessor- oder Prozessorbus-Hardware nötig, was zu einer kostengünstigen und nicht an spezielle Hardware gebundenen Realisierung des gesicherten Zugriffs auf Variablen führt. Ferner wird vorteilhaft während des gesicherten Zugriffs die zugreifende Task nicht durch einen von einer weiteren Task beabsichtigten Taskwechsel unterbrochen und zusätzlich wird der beabsichtigte Taskwechsel nicht verworfen, sondern verzögert, so daß nach der Auswertung der Taskwechselinformation am Ende des gesicherten Zugriffs der beabsichtigte Taskwechsel durch den Taskscheduler unmittelbar nachgeholt werden kann.

Ein weiterer wesentlicher Aspekt des erfindungsgemäßen Verfahrens ist darin zu sehen, daß zusätzlich zum Eintragen der Taskwechselinformation eine Zeitüberwachung mit einer mindestens die Dauer des gesicherten Zugriffs umfassenden Zeitspanne aktiviert wird und daß nach Ablauf der definierten Zeitspanne der aktuelle Zugriff beendet wird - Anspruch 2. Vorteilhaft wird die Zeitüberwachung beim erfindungemäßen Verfahren nicht generell beim Intitialisieren eines gesicherten Zugriffs, sondern nur bei einem während des aktuellen Zugriffs beabsichtigten Taskwechsels aktiviert und damit entfällt die dynamische Belastung, die üblicherweise bei der Verwendung der bereits bekannten Verfahren wie z.B. Semaphortechnik oder das Setzen einer Taskwechselsperre erforderlich ist. Dies führt zu einer zusätzlichen dynamischen Entlastung der Informationsverarbeitungsanlage bzw. des Prozessors.

Nach einer weiteren Ausgestaltung des erfindungsgemäßen Verfahrens wird am Ende des gesicherten Zugriffs und vor dem Eintragen der Freigabeinformation der Inhalt des Zugriffsstatusspeichers überprüft, so daß beim Vorliegen einer Taskwechselinformation die aktivierte Zeitüberwachung deaktiviert und von der aktuell zugreifenden Task eine betriebstechnische, den beabsichtigten Taskwechsel einleitende Information an den Taskscheduler übermittelt wird - Anspruch 3. Vorteilhaft ist durch die Überprüfung des Inhalts des Zugriffsstatusspeichers sichergestellt, daß unmittelbar nach Beendigung des gesicherten Zugriffs, der durch die Taskwechselinformation angezeigte, beabsichtigte Taskwechsel dem Taskscheduler mitgeteilt wird, da ohne das Anzeigen der betriebstechnischen, den beabsichtigten Taskwechsel anzeigenden Information der Taskscheduler den verzögerten Taskwechsel nicht ausführen würde. Statt dessen würde der beabsichtigte Taskwechsel zu dem Zeitpunkt ausgeführt, an dem die aktuell zugreifende Task durch den Taskscheduler unterbrochen wird, d.h. der beabsichtigte Taskwechsel würde unnötig über die Zeitdauer des gesicherten Zugriffs hinaus verzögert.

Weitere vorteilhafte Ausgestaltungen des erfindungsgemäßen Verfahrens sind den weiteren Ansprüchen zu entnehmen.

Im folgenden wird das erfindungsgemäße Verfahren anhand einer Figur näher erläutert.

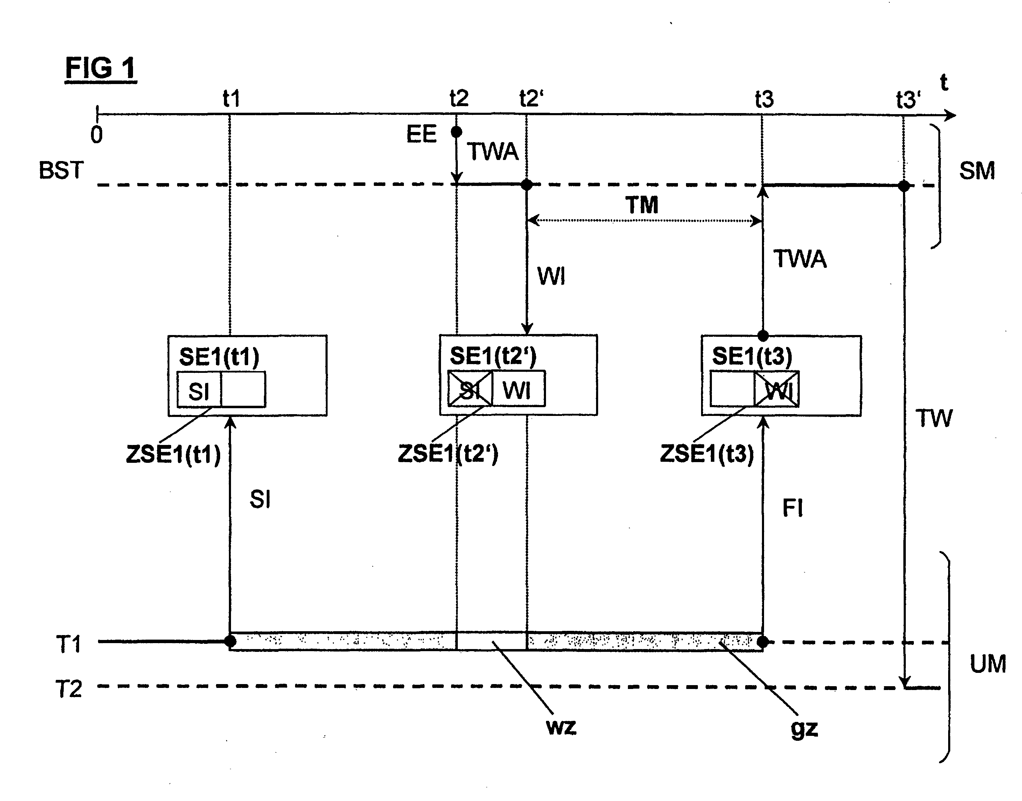

In Figur 1 sind beispielhaft eine erste und eine zweite Anwendertask T1,T2, sowie eine Betriebssystemtask BST gemäß ihrer zeitlichen Bearbeitung durch den Prozessor einer nach dem präemptiven Multitasking Verfahren wirkenden Informationsverarbeitungsanlage dargestellt. Desweiteren sind ein Supervisor-Modus SM und ein User-Modus UM des Prozessors und die zugehörigen Tasks durch zwei separate Bereiche angedeutet. Dabei ist im Supervisor-Modus SM die Betriebssystemtask BST, im weiteren auch als Scheduler bzw. Taskscheduler BST bezeichnet, und im User-Modus sind beispielhaft eine erste und eine zweite Anwendertask T1,T2 zur Bearbeitung durch den Prozessor dargestellt. Hierbei wird eine aktuell im Wartezustand befindliche Task - beispielsweise in der Figur 1 zum Zeitpunkt null insbesondere die Betriebssystemtask BST und die zweite Anwendertask T2 - mit Hilfe einer gestrichelten, mit BST und T2 bezeichneten Linie und eine aktuell ausgeführte Task - in der Figur 1 zum Zeitpunkt null die erste Anwendertask T1-durch eine mit T1 bezeichneten, durchgezogene Linie angedeutet.

Zur Darstellung des zeitlichen Ablaufs des erfindungsgemäßen Verfahrens eines gesicherten Zugriffs gz auf zumindest eine Variable ist eine Zeitachse t vorgesehen, worauf ein erster, zweiter, dritter, vierter und fünfter Zeitpunkt t1, t2, t2', t3, t3' markiert sind. Desweiteren ist eine Speichereinheit SE1 mit einer Zugriffstatusspeichereinheit ZSE1 zu dem ersten, dritten und vierten Zeitpunkt t1, t2', t3 dargestellt, wobei in der Speichereinheit ZSE1 Informationen bzgl. der ersten, aktuell ablaufenden Task T1 eingetragen werden, wobei der Speicher beispielsweise als Teilbereich eines flüchtigen Speichers realisiert sein kann. Gemäß dem erfindungsgemäßen Verfahren können in die der ersten, aktuell ablaufenden Anwendertask T1 zugeteilten Zugriffstatusspeichereinheit ZSE1 unter anderem eine Sperrinformation SI, eine Taskwechselinformation WI und eine Freigabeinformation FI eingetragen werden.

Desweiteren ist die Zeitdauer eines gesicherten Zugriffs gz auf zumindest eine Variable durch die erste Anwendertask T1 dargestellt, die sich vom ersten Zeitpunkt t1 bis zum vierten Zeitpunkt t3 erstreckt. Zum Zeitpunkt null ist die erste Anwendertask T1 bereits aktuell dem Prozessor zugeteilt und die zweite Anwendertask T2, sowie die Betriebssystemtask BST befinden sich im Wartezustand. Zum ersten Zeitpunkt t1 initialisiert die erste Anwendertask T1 einen gesicherten Zugriff auf zumindest eine Variable, d.h. in die Zugriffsstatusspeichereinheit ZSE1(t1) wird durch die erste Anwendertask T1 anstelle der in dieser eingetragenen Freigabeinformation FI die Sperrinformation SI eingetragen. Daraufhin befindet sich die erste, aktuell ausgeführte Anwendertask T1 in einem ununterbrechbaren Ausführungszustand und kann somit gesichert auf die gewünschten Variablen zugreifen.

Zu einem späteren, zweiten Zeitpunkt t2 wird beispielsweise durch ein externes Ereignis EE, z.B. das Vorliegen von externen Nachrichten, oder durch die Überschreitung der vom Taskscheduler BST der ersten Anwendertask T1 zugeteilten Zeitdauer dem Taskscheduler BST eine Taskwechselanforderung TWA angezeigt und daraufhin durch den Taskscheduler BST die aktuell ausgeführte, erste Anwendertask T1 in einen Quasi-Wartezustand wz gesteuert. Anschließend wird durch den Taskscheduler BST noch bevor er nach der erhaltenen Taskwechselanforderung TWA einen Taskwechsel TW anstößt, der Inhalt der Zugriffsstatusspeichereinheit ZSE1(t2') überprüft. Ist in der Zugriffspeichereinheit ZSE1(t2') für die aktuell ausgeführte, erste Anwendertask T1 eine Sperrinformation SI zu einem dritten Zeitpunkt t2' eingetragen, so wird durch den Taskscheduler BST der angeforderte Taskwechsel TWA verzögert und anstelle der Sperrinformation SI eine Taskwechselinformation WI in die Zugriffstatusspeichereinheit ZSE1(t2') eingetragen. Anschließend wird die erste, aktuell ausgeführte Anwendertask T1 weiterbearbeitet und somit der Quasi-Wartezustand wz durch den Taskscheduler BST wieder beendet. Die erste Anwendertask T1 kann somit den gesicherten Zugriff (gz) auf die gewünschten Variablen fortführen, ohne das sie vom Taskscheduler BST zur Freigabe des Prozessors gezwungen wird. Zusätzlich wird durch den Taskscheduler BST zum dritten Zeitpunkt t2' eine Zeitüberwachung TM zur Vermeidung einer unzulässig langen Blockierung des Prozessors durch den gesicherten Zugriff gz der ersten Anwendertask T1 aktiviert.

Am Ende des gesicherten Zugriffs gz - in Figur 1 beispielsweise als vierten Zeitpunkt t3 angedeutet - wird zunächst der Inhalt der Zugriffstatusspeichereinheit ZSE1(t3) auf das Vorliegen einer Taskwechselinformation WI überprüft. Ist keine Taskwechselinformation WI in der Zugriffstatusspeichereinheit ZSE1(t3) eingetragen, so wird durch die aktuell zugreifende, erste Anwendertask T1 anstelle der vorliegenden Sperrinformation SI die Freigabeinformation FI eingetragen und somit der gesicherte Zugriff gz beendet, d.h. die aktuell zugreifende, erste Anwendertask T1 kann daraufhin wieder unterbrochen werden. Die aktuell zugreifende, erste Anwendertask T1 kann im weiteren so lange auf den Prozessor zugreifen bis durch den Taskscheduler BST ein Taskwechsel TW vorgesehen ist, d.h. die der ersten Anwendertask T1 durch den Taskscheduler BST zugeteilte Nutzungszeit des Prozessors abgelaufen ist oder durch ein externes Ereignis EE eine Taskwechselanforderung TWA dem Taskscheduler BST angezeigt wird.

Ist dagegen eine Taskwechselinformation WI eingetragen, so wird - wie in Figur 1 dargestellt - dem Taskscheduler BST unmittelbar eine Taskwechselanforderung TWA angezeigt, so daß mit Hilfe dessen nach Abarbeitung der zugehörigen betriebstechnischen Tasks ein Taskwechsel TW durchgeführt werden kann. Zusätzlich wird von der ersten Anwendertask T1 anstelle der eingetragenen Taskwechselinformation WI die Freigabeinformation FI in die Zugriffstatusspeichereinheit ZSE1(t3) eingetragen und nach Beendingung des gesicherten Zugriffs gz die Zeitüberwachung TM deaktiviert. Weiterhin wird durch den im Supervisor-Modus SM ausgeführten Taskscheduler BST der ersten Anwendertask T1 der Prozessor entzogen und diese in den Wartezustand gesteuert.

Anschließend werden im Zeitraum zwischen dem vierten und dem fünften Zeitpunkt t3, t3' durch den Taskscheduler BST die für einen Taskwechsel TW vorgesehenen, betriebstechnischen Tasks innerhalb des Supervisor-Modus abgearbeitet, d.h. ein Taskwechsel TW durch das Betriebssystem durchgeführt. Für die Ausführung der zweiten Anwendertask T2, der der Prozessor aktuell zugeteilt wurde, wird der Prozessor in den User-Modus umgeschaltet und somit kann die zweite Anwendertask T2 ab dem fünften Zeitpunkt t3' dem Prozessor zugeteilt werden.

## Patentansprüche

1. Verfahren zum gesicherten Zugriff (gz) auf zumindest eine Variable in einem präemptiv Multitasking-gesteuerten Prozessorsystem, wobei für die Bearbeitung der Tasks (T1, T2) ein Taskscheduler (BST) vorgesehen ist,
bei dem ein Zugriffsstatusspeicher (ZSE1) vorgesehen ist,
- in den vor einem aktuellen Zugriff (gz) auf zumindest eine Variable von der zugreifenden Task (T1) eine Sperrinformation (SI) eingetragen wird,
- in dem während des aktuellen Zugriffs (gz) bei einem von dem Taskscheduler (BST) beabsichtigten Taskwechsel (TW) durch den Taskscheduler (BST) der Zugriffsstatusspeicher (ZSE1) auf eine eingetragene Sperrinformation (SI) überprüft wird und bei eingetragener Sperrinformation (SI) der Taskscheduler (BST) den beabsichtigten Taskwechsel (TWA) verzögert sowie mit seiner Hilfe eine Taskwechselinformation (WI) eingetragen wird, und
- in den am Ende des aktuellen Zugriffs (gz) durch die aktuell zugreifende Task (T1) eine Freigabeinformation (FI) eingetragen wird und bei eingetragener Taskwechselinformation (WI) der beabsichtigte Taskwechsel (TWA) durch die aktuell zugreifende Task (T1) eingeleitet wird.

2. Verfahren nach Anspruch 1,
**dadurch gekennzeichnet,**
**daß** zusätzlich zum Eintragen der Taskwechselinformation (WI) eine Zeitüberwachung (TM) mit einer mindestens die Dauer des gesicherten Zugriffs (gz) umfassenden Zeitspanne aktiviert wird, und daß nach Ablauf der definierten Zeitspanne der aktuelle Zugriff (gz) beendet wird.

3. Verfahren nach Anspruch 2,
**dadurch gekennzeichnet,**
**daß** am Ende des gesicherten Zugriffs (gz) und vor dem Eintragen der Freigabeinformation (FI) der Inhalt des Zugriffsstatusspeichers (ZSE1) überprüft wird, so daß beim Vorliegen einer Taskwechselinformation (WI) die aktivierte Zeitüberwachung (TM) deaktiviert und von der aktuell zugreifenden Task (T1) eine betriebstechnische, den beabsichtigten Taskwechsel einleitende Information an den Taskscheduler (BST) übermittelt wird.

4. Verfahren nach einem der Ansprüche 1 bis 3,
**dadurch gekennzeichnet,**
**daß** durch das Eintragen einer Information (SI,WI,FI) in den Zugriffsstatusspeicher (ZSE1) der Inhalt des Zugriffsstatusspeichers (ZSE1) überschrieben wird.

5. Verfahren nach einem der Ansprüche 1 bis 4,
**dadurch gekennzeichnet,**
**daß** die Sperrinformation (SI), die Taskwechselinformation (WI) und die Freigabeinformation (FI) durch zumindest eine Einbit-Information gebildet werden und die Sperrinformation (SI) und die Freigabeinformation (FI) in einer gemeinsamen, einzelnen Zugriffsstatusspeichereinheit gespeichert werden.

6. Verfahren nach einem der Ansprüche 1 bis 5,
**dadurch gekennzeichnet,**
**daß** eine Variable entweder durch eine in einer Speichereinheit gespeicherte Variable eines Softwaremoduls oder durch eine in einem Hardwareregister gespeicherte, hardwarebezogene Einstellinformation repräsentiert ist.

## Claims

1. Method for secure access (gz) to at least one variable in a preemptively multitasking-controlled processor system, a task scheduler (BST) being provided for processing the tasks (T1, T2),
in which an access status memory (ZSE1) is provided
- into which a blocking information item (SI) is input by the accessing task (T1) before a current access (gz) to at least one variable,
- in which when there is a task change (TW) intended by the task scheduler (BST) during the current access (gz), the task scheduler (BST) checks the access status memory (ZSE1) for an input blocking information item (SI) and when the blocking information item (SI) is input the task scheduler (BST) delays the intended task change (TWA) and a task change information item (WI) is input using said blocking information item (SI), and
- into which a release information item (FI) is input by the currently accessing task (T1) at the end of the current access (gz), and when a task change information item (WI) is input the intended task change (TWA) is initiated by the currently accessing task (TI).

2. Method according to Claim 1, **characterized in that** in addition to inputting the task change information item (WI) a time monitoring system (TM) with a time period comprising at least the duration of the secure access (gz) is activated, and that the current access (gz) is terminated after the expiry of the defined time period.

3. Method according to Claim 2, **characterized in that** at the end of the secure access (gz) and before the inputting of the release information item (FI) the contents of the access status memory (ZSE) are checked so that when a task change information item (WI) is present the activated time monitoring system (TM) is deactivated and a technical operating information item which initiates the intended task change is transmitted to the task scheduler (BST) by the currently accessing task (T1).

4. Method according to one of Claims 1 to 3, **characterized in that** the contents of the access status memory (ZSE1) are overwritten by the inputting of an information item (SI, WI, FI) into the access status memory (ZSE1).

5. Method according to one of Claims 1 to 4, **characterized in that** the blocking information item (SI), the task change information item (WI) and the enable information item (FI) are formed by at least one single-bit information item and the blocking information item (SI) and the enable information item (FI) are stored in a common, individual access status memory unit.

6. Method according to one of Claims 1 to 5, **characterized in that** a variable is represented either by a variable of a software module which is stored in a memory unit or by a hardware-related setting information item which is stored in a hardware register.

## Revendications

1. Procédé d'accès sécurisé (gz) à au moins une variable dans un système de processeur commandé en mode multitâche préemptif, un programmateur de tâches (BST) étant prévu pour le traitement des tâches (T1, T2), dans lequel est prévue une mémoire de l'état de l'accès (ZSE1), dans laquelle
- une information de blocage (SI) est introduite, avant un accès actuel (gz) à au moins une variable, par la tâche (T1) exécutant un accès,
- le programmateur de tâches (BST) contrôle ladite mémoire de l'état de l'accès (ZSE1) pendant l'accès actuel (gz) lors d'un changement de tâche (TW) envisagé par ledit programmateur de tâches (BST) pour y détecter une information de blocage (SI) mise en mémoire et dans laquelle, en présence d'une information de blocage (SI) mise en mémoire, le programmateur de tâches (BST) diffère le changement de tâche (TWA) envisagé et une information de changement de tâche (WI) est introduite à l'aide de celui-ci, et
- une information de libération (FI) est introduite par la tâche (T1) exécutant actuellement un accès à la fin de l'accès actuel (gz) et dans laquelle, en présence d'une information de changement de tâche (WI) mise en mémoire, le changement de tâche (TWA) envisagé est initialisé par la tâche (T1) exécutant actuellement un accès.

2. Procédé selon la revendication 1, **caractérisé en ce qu'**additionnellement à l'introduction de l'information de changement de tâche (WI) un contrôle temporel (TM) ayant un intervalle de temps couvrant au moins la durée de l'accès sécurisé (gz) est activé et **en ce qu'**à l'expiration de l'intervalle de temps défini il est mis fin à l'accès actuel (gz).

3. Procédé selon la revendication 2, **caractérisé en ce que** le contenu de la mémoire de l'état de l'accès (ZSE1) est contrôlé à la fin de l'accès sécurisé (gz) et avant l'introduction de l'information de libération (FI), de sorte qu'en présence d'une information de changement de tâche (WI) le contrôle temporel activé (TM) est désactivé et une information du système d'exploitation initialisant le changement de tâche envisagé est transmise au programmateur de tâches (BST) par la tâche (T1) exécutant actuellement un accès.

4. Procédé selon l'une des revendications 1 à 3, **caractérisé en ce que** l'introduction d'une information (SI, WI, FI) dans la mémoire de l'état de l'accès (ZSE1) remplace le contenu de ladite mémoire de l'état de l'accès (ZSE1).

5. Procédé selon l'une des revendications 1 à 4, **caractérisé en ce que** l'information de blocage (SI), l'information de changement de tâche (WI) et l'information de libération (FI) sont constituées par au moins une information d'un bit et **en ce que** l'information de blocage (SI) et l'information de libération (FI) sont introduites dans une unité de mémoire de l'état de l'accès distincte et commune.

6. Procédé selon l'une des revendications 1 à 5, **caractérisé en ce qu'**une variable est représentée soit par une variable d'un module logiciel mise en mémoire dans une unité de mémoire soit par une information de réglage concernant le hardware et mise en mémoire dans un registre hardware.
